# EUROPEAN PATENT SPECIFICATION

(11) **EP 2 422 025 B1**
(45) Date of publication and mention of the grant of the patent: **31.12.2014**
(21) Application number: 10719808.7
(22) Date of filing: 16.04.2010
(51) Int. Cl.: E04F 13/08, E04C 2/292, E04C 2/296, B32B 27/12, B32B 5/18, E04B 1/94

(54) **THERMAL ISOLATION AND FACADE FINISHING PANEL, ITS PRODUCTION AND INSTALLATION PROCESSES**
WÄRMEDÄMM- UND FASSADENABSCHLUSSPLATTE, IHRE HERSTELLUNGS- UND INSTALLIERVERFAHREN
ISOLATION THERMIQUE ET PANNEAU DE FINITION DE FACADE, SES PROCEDES DE PRODUCTION ET D'INSTALLATION

(30) Priority: 21.04.2009 LV 090081
(43) Date of publication of application: 29.02.2012
(73) Proprietor: Oslejs, Janis, 1010 Riga (LV)
(72) Inventor: LAPSA, Videvuds-Arijs, LV-1067 Riga (LV)
(74) Representative: Fortuna, Jevgenijs
(86) International application number: PCT/LV2010/000004
(87) International publication number: WO 2010/123335

(56) References cited:
- FR-A1- 2 601 404
- FR-A1- 2 768 451
- GB-A- 1 268 353
- GB-A- 2 296 263
- US-A- 3 159 943

## Description

### Description of the invention

Invention relates to boundary constructions of the buildings, in particular, to its construction and reconstruction technological processes. The field of use of the invention is thermal isolation of exterior walls of residential, public and industrial buildings as well as other boundary constructions of buildings.

There is known technological process for thermal isolation of exterior walls [1], whereby adhesive mortar lumps are applied on the rigid thermal insulation board perimeter and on the mid-part and then thermal isolation board is pressed against the wall thus gluing it. Gluing is reinforced with rag-bolts. Further thin layer of mortar reinforced with fiberglass mesh is laid on thermal isolation as a base layer afterwards covered with base layer and finishing (decorative layer) of rendering. The disadvantage of this site made multilayer and multi process technology is exigency of several returns by craftsmen at the same isolated area for completing it (gluing thermal isolation, gluing reinforcement mesh, render first layer, render second layer, paint rendering), extensive use of staging and the large volume of manual labor. In addition, this technology involves a number of wet processes - twice pasting and gluing, at least twice rendering and therefore this process is seasonal, because it cannot be carried out at air temperatures below +5°C.

There is known a thermal isolation for exterior wall [2], which contains both- the facade decoration layer and thermal isolation, for example expanded polystyrene board, both glued together. This element is also glued to existing wall using adhesive mortar lumps. See as well FR 2 601 404 A1.

The disadvantage of use of this element and techniques, as well as previously described technique [1] is that thermal isolation and adhesive mortar lumps still form free air voids on the facades, especially on rough facades, near the existing wall,. There is free air convective motion and exchange in that void between wall and thermal isolation which significantly lowers effect of thermal isolation. Moreover the oxygen in voids between thermal isolation and isolated wall is promoting fire hazard especially if mentioned voids are connected together in all isolated area and thus functions as chimney and distribution channel of flame in mostly vertical but also horizontal direction. Therefore combustion process can spread throughout the building facade's surface.

Therefore the aim of this invention is to create a facade insulation panels, their manufacturing and assembly processes that would allow a significant reduction of labor load during isolation processes, reduce seasonal nature of isolation processes, as well as improve the thermal performance and to ensure fire safety of isolated facade.

This aim is achieved by offering a pre-fabricated thermal isolation panel according to claim 1 containing a solid facade trim plate or layer material, to which inner surface of a rigid insulation material, for example, foam polystyrene thermal insulation layer, is glued or fixed in other way. The soft, non-combustible heat insulating material e.g. mineral wool layer is glued or fixed in another way to the said rigid thermal isolation layer. The size of the exterior trim layer may be in one or two directions asymmetrically larger than the thermal insulating layer to overlap in one or two perpendicular directions. The thermal isolation panel is pre-fabricated and then being assembled so that the exterior trim layer is overlapping previously mounted thermal isolation panel below, and possibly also by the side mounted panel.

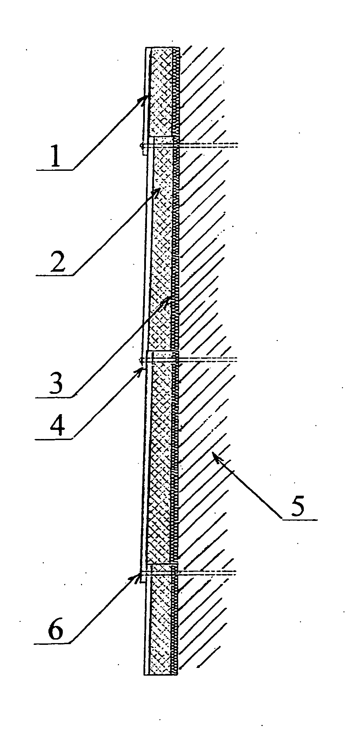

The proposed industrially preformed facade isolation panel (fig.1), containing a rigid material facade trim layer 1, which also serves as protection for thermal isolation and load bearing coating, made of, for example, fiber-cement board or corrosion-protected metal; at its inner surface mounted (glued) rigid material of thermal isolation layer 2, for example made of extruded or expanded polystyrene; and on its free inner surface is enclosed (glued to) a soft, fibrous and non-combustible material, for example mineral wool layer 3, whose uncompressed thickness corresponds to the possible roughness height of the facade or is larger than that.

Finishing plate sizes of such kind of thermal isolation panel may be larger in both directions comparing with thermal isolation layer and can be moved a side asymmetrically to vertical and horizontal directions.

Such a panel is assembled prior to its raising and fixing to the facade, mostly industrially, with minimal manual labor used.

Such pre-produced thermal isolation panels are lifted and placed on facade 5 in designed place, bolted with screws 6 through solid panel covering material and the two thermal isolation layers. Screws may be made of material with low thermal conductivity. Screws should preferably be inserted through the insulation panel, both above, below, and side-panel (see fig.1). Screw head and washer may create the decorative facade elements. Thereby soft insulating layer 3 is easily deformed along the entire existing facade terrain - it eliminates usage of more heavy mortar lumps and the wet process, opposed to that it is used in [1] and [2]

If the trim layer is not overlapping across the thermal insulating layer edges, the joints between panels - the vertical and horizontal - are sealed with highly adhesive, flexible, and the external environment-resistant mastic or joint element. If the trim layer is overlapping in two directions, then horizontal joint is being covered by overlap of the panel located above, but vertical joint is being covered by overlap of the side panel in direction of the prevailing wind. If the trim and protective layer of the panel is made of metal, then the screw head can be hidden under side panel overlap folds. In both cases, neither the vertical, nor horizontal joints sealing with mastic are required, thereby the wet and on the temperature-dependent process is uprooted (cold mastic becomes hard and loses adhesion ability) - sealing is no longer necessary in any way.

The compromise is also possible - vertical joints are sealed with mastic (in appropriate weather conditions), but horizontal joints are covered by the horizontal top panel edges overlap.

There are several advantages of use of the suggested thermal isolation panel technology comparing with presently known and used thermal isolation methods: 1) the isolation construction is with higher heat/cold resistance because there is no convective air voids between the solid thermal isolation and more or less uneven isolated facade, 2) there is no fire hazard in use of burnable or diffluent thermal isolation, because use of soft filling layer of isolation 3 diverts all possible air channels where flame and flue gas can be spread; air void is filled and hedged in all directions; 3) there is no any wet processes of construction - the use of expensive adhesive and multiple wet finishing processes, this removing the seasonal restrictions for the proposed technology, and facade insulation may be performed throughout the year, 4) the trim and protective layer of thermal isolation is not made directly at construction site but it can be made in factory using high productivity production equipment (creations of trim layer can be mechanized) thereby reducing costs and promoting construction quality; 5) the only needed procedure in constructing site for making thermal isolation is fixing proposed thermal isolation panes to the facade in designed place using screws; 6) hard facade trim layer much better protects heat insulation material from water, frost and mechanical external effects than previously used thin layer of plastering made directly in construction site.

The source of information used
1. ATLAS XPS Systems. Zlozony system izolacji cieplnej z wyprawami tynkarskimi. http://www.atlas.com.pl
2. TENAPORS CERAMIC. http://www.tenax.lv.

## Claims

1. A facade thermal insulation panel, which contains a solid facade exterior trim material plate or layer (1) and a heat insulation layer (2), being glued or fixed in other way to the inner surface of the plate or layer (1), **characterized in that** the facade thermal insulation panel is being pre-produced and **in that** a soft and non-combustible heat insulating material, as pressure smoothing and air void sealing layer (3), is being glued or fixed in other way to the inner side of the solid heat insulation layer (2), being extruded or expanded polystyrene layer.

2. The facade thermal insulation panel according to claim 1, **characterized in that** its exterior trim panel's or layer's (1) size in one or both perpendicular and asymmetric dimensions is greater than the heat insulating layer's (2) dimensions and **in that** it is being glued or fixed in other way to the heat insulation layer (2) with one-sided overlap in one or two perpendicular directions.

3. A process for thermal isolation of facade using panels according to claim 1 or 2, **characterized in that** the polystyrene layer (2) and fixed to it soft and non-combustible heat insulating material, as pressure smoothing and air void sealing layer (3) are being fixed to the facade exterior trim material plate or layer (1) before installing to a facade.

4. A process for thermal isolation of facade using panels according to claim 1 or 2, **characterized in that** the said panels are being fixed to facade ensuring overlapping of free from heat insulating material (3) edges of the solid facade exterior trim material plate or layer (1) over connection joint with side and lower heat insulating panels in one or two directions thus sealing these connection joints.

5. The process for thermal isolation of facade according to claim 4, **characterized in that** the facade thermal insulation panels are bolted to the facade using screws going through the overlapping edges of the insulation panels - higher, lower and sided panel trim layer.

6. The process for thermal isolation of facade according to claim 4 or 5, **characterized in that** the screws fixing the panels are being hidden under edge overlap folds.

## Patentansprüche

1. Eine Fassaden-Wärmedämmplatte, die aus einer stabilen äußeren Besatzmaterialplatte oder Besatzschicht (1) und einer Wärmedämmschicht (2) besteht und an der Innenseite der Platte oder Schicht (1) angeklebt oder in anderer Weise befestigt wird, ist **dadurch gekennzeichnet, dass** die Fassaden-Wärmedämmplatte vorgefertigt wird und dass ein weiches und nicht brennbares Wärmedämmmaterial als druckmildernde und luftspaltabdichtende Schicht (3) an der Innenseite der stabilen Wärmedämmschicht aus einer extrudierten oder expandierten Styroporschicht angeklebt oder in anderer Weise befestigt wird.

2. Die Fassaden-Wärmedämmplatte gemäß Anspruch 1 ist **dadurch gekennzeichnet, dass** die Abmessungen der äußeren Besatzplatte oder Besatzschicht (1) in beiden Richtungen, d. h. senkrecht und asymmetrisch oder nur in einer Richtung größer ist als die Abmessungen der Wärmedämmschicht (2) und dass sie an der Wärmedämmschicht (2) angeklebt oder in anderer Weise befestigt wird, so dass eine Seite in einer oder in zwei senkrechten Richtungen überlappt.

3. Der Prozess der Fassaden-Wärmedämmung, in dem Platten gemäß Anspruch 1 oder 2 verwendet werden, ist **dadurch gekennzeichnet, dass** die darauf zu befestigende Styroporschicht (2) aus einem weichen und nicht brennbaren Wärmedämmmaterial besteht, das druckmildernd wirkt und als luftspaltabdichtende Schicht (3) an der äußeren Fassaden-Besatzmaterialplatte oder Besatzschicht (1) befestigt wird, bevor sie an

4. Der Prozess der Fassaden-Wärmedämmung mit Platten gemäß Anspruch 1 oder 2 ist **dadurch gekennzeichnet, dass** die besagten Platten an der Fassade befestigt werden, so dass sie die Kanten des Wärmedämmmaterials (3) der stabilen Fassadenmaterialbesatzplatte oder der Besatzschicht (1) überlappen und die Verbindungsfuge der seitlichen und unteren Wärmedämmplatten in einer oder zwei Richtungen bedecken, um die Verbindungsfugen zu dichten.

5. Der Prozess der Fassaden-Wäimedämmung gemäß Anspruch 4 ist **dadurch gekennzeichnet, dass** die Fassaden-Wärmedämmplatten an der Fassade mit Schrauben befestigt werden, die durch die überlappenden Kanten der Dämmplatten - der darüber- und darunterliegenden und seitlichen Plattenbesatzschicht durchgesteckt werden.

6. Der Prozess der Fassaden-Wärmedämmung gemäß Anspruch 4 oder 5 ist **dadurch gekennzeichnet, dass** die Schrauben, die die Platten fixieren unter dem Kantenüberlappungsfalz verborgen sind.

## Revendications

1. Panneau d'isolation thermique de façade, qui contient une plaque ou couche de matériau solide d'habillage extérieur de façade (1) et une couche d'isolation thermique (2), qui est collée ou fixée d'une autre manière à la surface interne de la plaque ou couche (1), **caractérisé en ce que** le panneau d'isolation thermique de façade est préfabriqué et **en ce qu'**un matériau d'isolation thermique mou et non combustible, en tant que couche d'amortissement de pression et de scellage de vide d'air (3), est collé ou fixé d'une autre manière à la face intérieure de la couche d'isolation thermique solide (2), qui est une couche de polystyrène extrudé ou expansé.

2. Panneau d'isolation thermique de façade selon la revendication 1, **caractérisé en ce que** la taille de son panneau ou de sa couche d'habillage extérieur (1) dans l'une ou dans l'une et l'autre des dimensions perpendiculaire et asymétrique est supérieure aux dimensions de la couche d'isolation thermique (2) et **en ce qu'**il est collé ou fixé d'une autre manière à la couche d'isolation thermique (2) avec un chevauchement sur un côté dans une ou deux directions perpendiculaires.

3. Procédé d'isolation thermique de façade au moyen de panneaux selon la revendication 1 ou 2, **caractérisé en ce que** la couche de polystyrène (2) et, fixé à celle-ci, un matériau d'isolation thermique mou et non combustible, en tant que couche d'amortissement de pression et de scellage de vide d'air (3) sont fixés à la plaque ou couche d'habillage extérieur de façade (1) avant installation sur une façade.

4. Procédé d'isolation thermique de façade au moyen de panneaux selon la revendication 1 ou 2, **caractérisé en ce que** lesdits panneaux sont fixés à une façade en assurant un chevauchement des bords exempts de matériau d'isolation thermique (3) de la plaque ou couche de matériau solide d'habillage extérieur de façade (1) sur un joint de raccordement avec des panneaux isolants latéraux et inférieurs dans une ou deux directions, ce qui scelle ces joints de raccordement.

5. Procédé d'isolation thermique de façade selon la revendication 4, **caractérisé en ce que** les panneaux d'isolation thermique de façade sont boulonnés à la façade au moyen de vis traversant les bords se chevauchant de la couche d'habillage de panneau supérieur, inférieur et latéral des panneaux d'isolation.

6. Procédé d'isolation thermique de façade selon la revendication 4 ou 5, **caractérisé en ce que** les vis fixant les panneaux sont masquées sous des plis à chevauchement de bord.
